Europäisches Patentamt

European Patent Office

Office européen des brevets

(19)

(11) Publication number: **0 304 168**
**A1**

## (12) EUROPEAN PATENT APPLICATION

(21) Application number: 88306670.6

(51) Int. Cl.⁴: **F16D 55/14**

(22) Date of filing: 20.07.88

The title of the invention has been amended (Guidelines for Examination in the EPO, A-III, 7.3).

(30) Priority: 22.07.87 GB 8717307
07.12.87 GB 8728532
01.02.88 GB 8802185

(43) Date of publication of application:
22.02.89 Bulletin 89/08

(84) Designated Contracting States:
DE ES FR GB IT

(71) Applicant: LUCAS INDUSTRIES public limited company
Great King Street
Birmingham, B19 2XF West Midlands(GB)

(72) Inventor: Price, Anthony George
14 Meadow Lane Croesyceiliog
Cwmbran Gwent NP44 2EY Wales(GB)
Inventor: Campbell, Roy
The Corner House 1 Marlbrook Lane Licky Rock
Bromsgrove Worcestershire(GB)
Inventor: Parry, David
39 Marlborough Road
Maes Y Rhiw Cwmbran Wales(GB)

(74) Representative: Spall, Christopher John et al
BARKER, BRETTELL & DUNCAN 138 Hagley Road
Edgbaston Birmingham B16 9PW(GB)

(54) Self-energising disc brake.

(57) A self-energising disc brake of the spreading type is adapted to be actuated for normal service braking by an hydraulic actuator (40). The actuator (40) is located between the pressure plates (10, 11) of an expander mechanism (4) in which balls or rollers (16) are housed in pair of complementary recesses (17) in adjacent faces of the plates (10, 11). The actuator (40) is so positioned that the line of action of the applying force from the actuator (40) acts the pressure plates (10, 11) at a position disposed within the radial thickness of each plate between its radially innermost and outermost peripheral edges.

FIG 2

## IMPROVEMENTS IN SELF-ENERGISING DISC BRAKES

This invention relates to self-energising disc brakes of the kind in which rotatable friction discs provided with linings of friction material are adapted to be brought into engagement with spaced opposed radial surfaces in a housing by pressure plates located between the friction discs and centred by stationary pilot lugs, balls or rollers are located in co-operating oppositely inclined angularly spaced recesses in the adjacent faces of the pressure plates, and the application of the brake is initiated by moving the pressure plates angularly in opposite directions, the pressure plates then moving apart by a tendency for the balls or rollers to ride up ramps defined by the edges of the recesses so that the pressure plates move into engagement with the friction discs which are urged into engagement with the radial surfaces, the pressure plates being carried round with the friction discs until one is arrested by the engagement of a lug on the plate with a drag-taking stop abutment in the housing, and the continued angular movement of the other pressure plate providing a servo action.

Self-energising brakes of the kind set for the may be dry or they may be of the liquid cooled or oil-immersed type, and such brakes are commonly used in tractors and like vehicles and are hereinafter called brakes of the kind set forth.

We are aware of US 3 343 632 in which a brake of the kind set forth is operated for normal service braking by means of fluid-pressure actuator which is located within the housing. The actuator comprises a cylinder body having a bore in which work a pair of opposed pistons acting at their outer ends between outwardly directed radial lugs on the pressure plates in order to move the plates angularly in opposite directions when fluid under pressure is admitted to a pressure space between adjacent end of the two pistons. A pair of tension springs acting between the lugs co-operate with relatively movable components of an automatic adjuster. The tension springs act as return springs to urge the pistons into retracted positions in a "off" position of the brake, and to assist in preventing the pistons from separating from the cylinder body.

We are also aware of US 2 731 114 in which a pair of double-ended hydraulic actuators are disposed substantially in diametrically opposed positions in a brake of the kind set forth inwardly of the pressure plates and the actuators act between respective pairs of inwardly directed lugs on the pressure plates.

According to our invention, in a self-energising disc brake of the kind set forth the brake is operated hydraulically for normal service operation by means of an hydraulic actuator which is located within the housing, and the actuator comprises a cylinder body having a longitudinal bore of which the axis is chordal to the pressure plates and in which works at least one piston co-operating with one of the pressure plates, the cylinder body being so positioned between the pressure plates that the line of action of the force from the piston to the respective pressure plate acts at a position disposed within the radial thickness of the plate between its radially innermost and outermost peripheral edges.

This improves the efficiency of the brake since the brake applying force can be applied at a position close to or substantially coincident with the path of rolling contact between the balls or rollers and the ramps when the pressure plates are moved angularly to initiate application of the brake.

The cylinder body may be disposed in a circumferentially extending gap defined between complementary portions of the two pressure plates.

The gap may be formed in the inner adjacent faces of the pressure plates with the outer faces of the pressure plates being continuous.

In another construction the gap is formed by removing the total thickness of the material of each plate for the required circumferential distance. This is achieved by forming recesses in the plates which extend inwardly from their peripheral edges.

This has the advantage that axial space is conserved, in as much as the axial thickness of each plate may be effectively reduced, with the consequent advantage that the brake is more compact axially.

In brakes in which the total thickness of the material of each plate is removed, the pressure plates present discontinuous or interrupted braking faces to the friction linings. It is known that brake linings of certain materials will perform well over such discontinuous or interrupted braking faces. However, in instances in which discontinuous or interrupted braking faces are detrimental to lining material, a relatively thin annular disc is mounted on the outer face of each pressure plate to define a continuous face with which the adjacent friction member is engageable when the brake is applied.

In such a construction each annular disc is keyed against rotation with respect to the pressure plate upon which it is mounted.

Preferably each annular disc includes angularly spaced lugs which project inwardly with respect to the inner edges of the pressure plates, complementary pairs of superimposed lugs forming anchorages for opposite ends of return springs which act to urge the annular discs towards each other, in turn acting to urge the pressure plates towards each other into a retracted position.

In the constructions described above, equivalent amounts of material are removed from the pressure plates at positions diametrically opposite the gap substantially to balance the plates in operation.

The cylinder body may be fixed to the housing and incorporate a pair of opposed pistons which, at their outer ends, having direct engagements with complementary abutment surfaces on the pressure plates.

The pistons may work in a common bore in the body, or the pistons may comprise a telescopic assembly of inner and outer pistons of which the outer piston works in a bore in the body, and the inner piston works in a bore in the outer piston.

In either construction the body may be carried by, or be integral with, a mounting plate which is detachably mounted on the housing and forms a closure for a radial opening through which the cylinder body extends into the housing.

This facilitates and simplifies construction since the actuator can be removed from the brake and replaced simply by the removal from the brake and subsequent replacement of at least two securing bolts.

The gap may extend radially inwards for a distance such that the cylinder is disposed wholly within the radial thickness of the plates.

This has the advantage that radial space is conserved, both inwardly and outwardly, and the line of action of the force from the piston may act at a position lying substantially on a pitch circle of constant diameter upon which the recesses lie.

The brake may also be applied for parking or in an emergency by a mechanical mechanism which extends through a second radial opening in the housing spaced angularly from the opening through which the cylinder body extends, suitably diametrically opposed therefrom.

The mechanical mechanism may comprise a pair of toggle links of which each link is pivotedly coupled at its outer end to a respective one of the pressure plates by means of a pivotal connection, the inner ends of both links being pivotally connected to a pull-rod which is radially displaceable to draw the pivotal connections relatively towards each other to initiate application of the brake.

In such a construction each pivotal connection lies substantially on a pitch circle of the respective pressure plate coincident with the line of action of the force from the respective piston.

In another construction, the mechanical mechanism comprises a wedge which acts between abutment on the plates and is adapted to be withdrawn relatively from the housing in a radial direction to effect relative angular movement between the plates.

Some embodiments of out invention are illustrated in the accompanying drawings in which:-

Figure 1 is an end view of a portion of a spreading brake;

Figure 2 is a section on the line 2-2 of Figure 1;

Figure 3 is a view similar to Figure 1 of another brake;

Figure 4 is a section on the line 4-4 of Figure 3;

Figure 5 is an end view similar to Figure 3 of a modified brake;

Figure 6 is a section on the line 6-6 of Figure 5; and

Figure 7 is a view similar to Figure 6 but showing a modification.

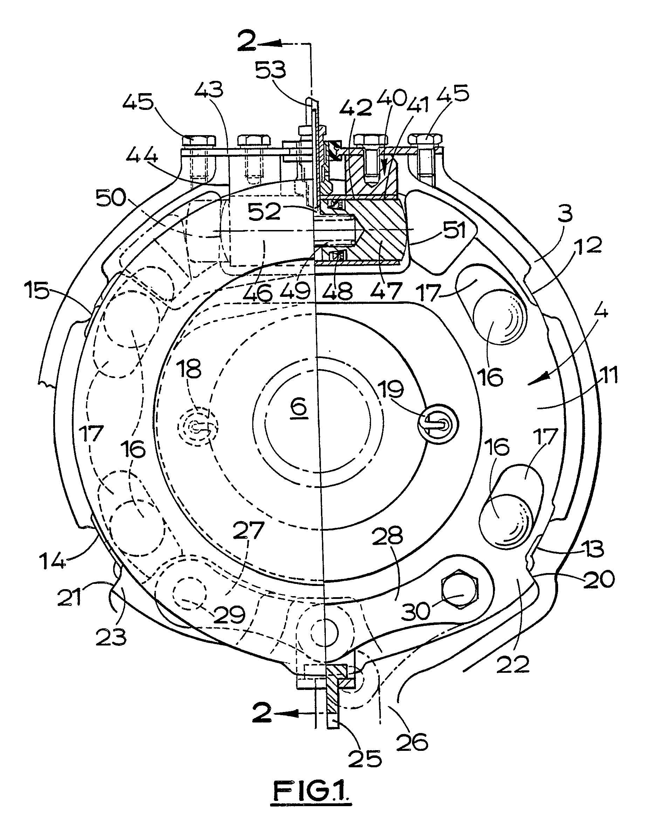

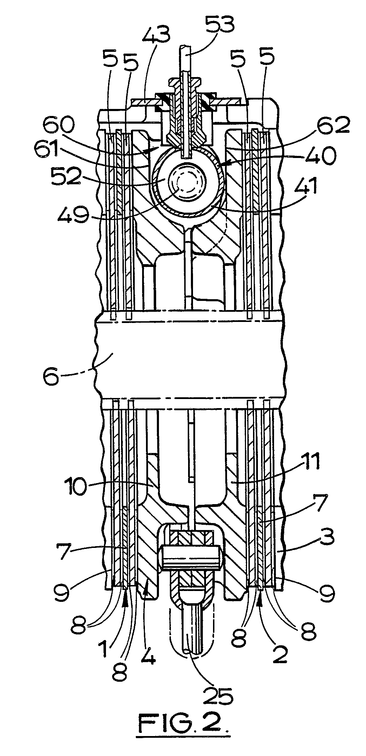

The brake illustrated in Figures 1 and 2 of the drawings is of the spreading type in which two sets 1, 2 of friction discs are located in a housing 3 on opposite sides of an expander mechanism 4.

Each set 1, 2 comprises a pair of rotatable friction plates 5 which are slidably keyed to a shaft 6 which extends axially through the housing 3, and a stationary intermediate disc 7 which is disposed between the plates 5 of each pair and is keyed to the housing 3 against relative rotation.

Friction linings 8 on opposite sides of each plate 5 are adapted to be brought into engagement with the intermediate disc 7 and with spaced opposed radial braking surfaces 9 at opposite ends of the housing 3 upon operation of the expander mechanism 4.

The expander mechanism 4 comprises a pair of pressure plates 10, 11 located between the adjacent innermost plates 5 of each set 1, 2 and centred by angularly spaced stationary pilots 12, 13, 14, 15. Balls 16 are located in co-operating oppositely angularly spaced recesses 17 in the adjacent faces of the pressure plates 10, 11, and the recesses 17 lie on pitch circles of constant and equal diameters. A pair of diametrically opposed compression return springs 18, 19 act between the pressure plates 10, 11 to hold the mechanism 4 in a retracted position with the balls 16 and the bases of the ramps defined by end faces of the recesses 17.

The application of the brake is initiated by moving the pressure plates 10, 11 angularly in opposite directions which causes the pressure plates 10, 11 to move axially relatively away from each other due to the tendency for the balls 16 to ride up the ramps defined by the end faces of the recesses 17. This urges the friction plates 5 into engagement with the radial surfaces 9 on the housing 3. The pressure plates 10, 11 are then carried round with the discs 1 until one is arrested by the engagement of a lug 22, 23 on a respective plate with a drag-taking abutment 20, 21 suitably an end face of the pilot 13. 14 respectively, whereafter continued angular movement of the other plate provides a servo action.

The brake is applied mechanically for parking or in an emergency by a pull-rod 25 which extends through a radial opening 26 in the housing 3 and is coupled to the outer ends of a pair of toggle links 27, 28 of which the inner ends are pivotally connected to respective pressure plates by pivotal connections 29, 30. The pivotal connections 29, 30 lie substantially on the pitch circles of the recesses 17 of the respective pressure plates 10, 11.

For normal service braking the brake is applied hydraulically by an hydraulic actuator 40 which acts between the pressure plates 10, 11.

As illustrated the actuator 40 comprises a cylinder 41 having an open-ended longitudinal through-bore 42 of which the axis is chorded to the pressure plates. The cylinder 41 is housed between the pressure plates 10, 11 being located between the inner and outer diameters of the pressure plate 10, 11 and carried from the inner end of a mounting plate 43 which projects into the housing 3 through a radial opening 44 in the housing 3 and is detachably secured to the housing 3 by detachably bolts 45. The radial opening 44 is diametrically opposed with respect to the radial opening 26. A pair of opposed pistons 46, 47, each provided with a seal 48, work in the bore 42 and are urged away from each other by means of a compression spring 49.

The outer ends of the pistons 46, 47 co-operate with respective abutment faces 50, 51 on the pressure plates 10, 11 at such locations that the lines of action of the applying forces from the pistons 46, 47 each lie substantially on the pitch circle of the recesses 17 of the respective pressure plates 10, 11. A pressure space 52 in the cylinder 41 between the pistons 46, 47 is adapted to be pressurised through a radial supply connection 53.

As illustrated the cylinder 41 is disposed between the pressure plates 10, 11 in a circumferentially extending gap 60 which is formed by removing the material on the adjacent inner faces of the plates to form oppositely facing recesses 61 and 62 which co-operate to define the gap 60. The recesses 61 and 62 extend inwardly from the outer peripheral edges of the plates for a distance which is sufficient to enable the gap to receive the cylinder 41 in such a position that forces from the piston 46, 47 lie substantially on the pitch circle of the recess 17.

When the brake is applied mechanically the pull-rod 25 is withdrawn outwardly in a radial direction, in turn to withdraw the toggle links 27 and 28, and urge the pivotal connections 29 and 30 and, in consequence, the pressure plates 10, 11 angularly towards each other.

When the brake is applied hydraulically by pressurisation of the pressure space 52, the pistons 46 and 47 are urged away from each other, acting on the abutment faces 50, 51 in turn to urge the pressure plates 10, 11 angularly away from each other.

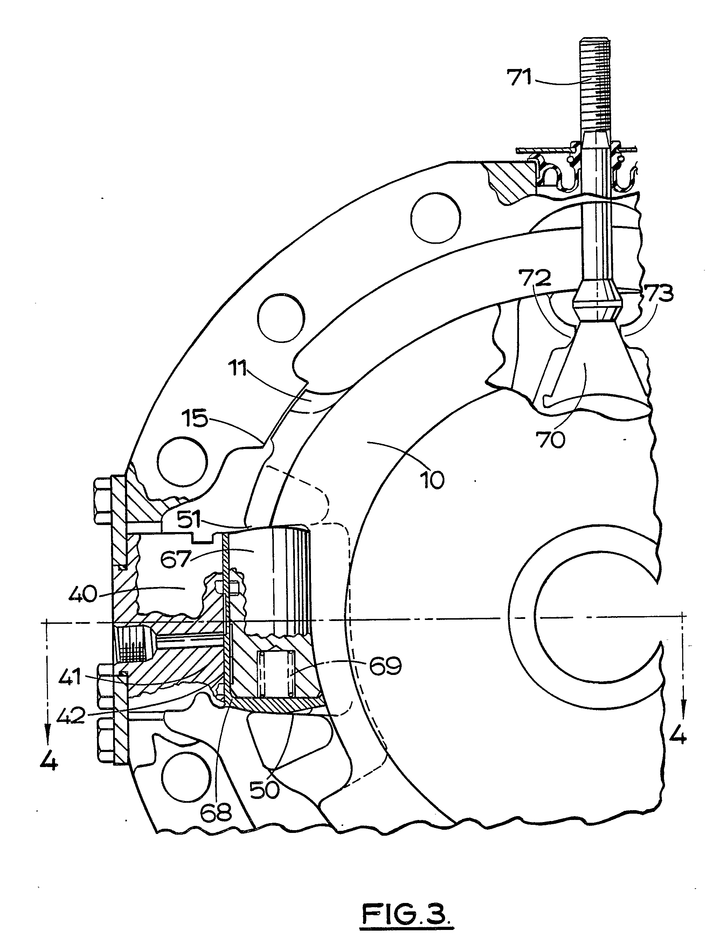

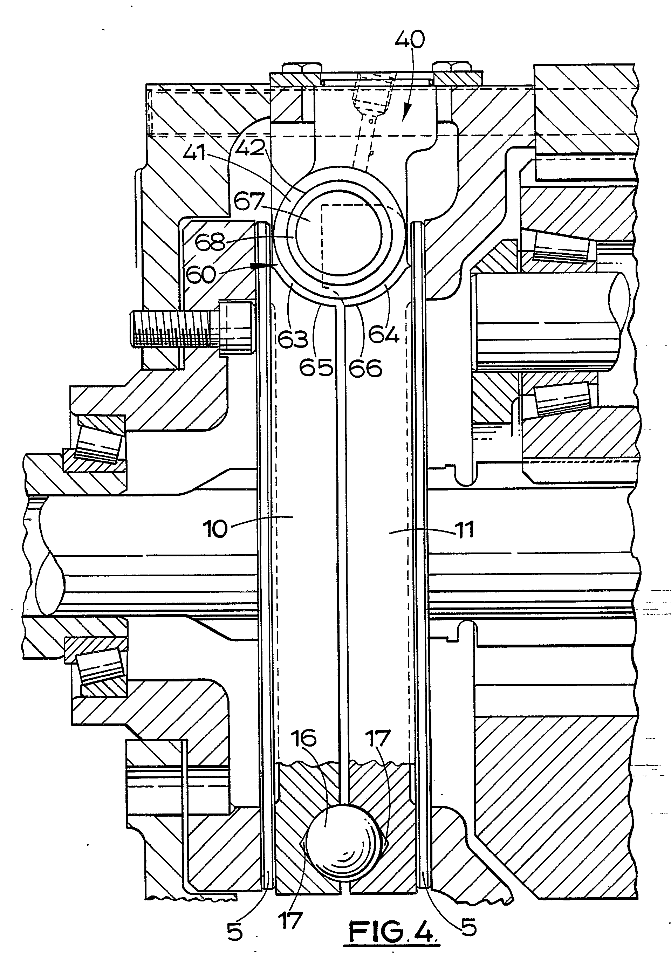

The brake illustrated in Figure 3 and 4 of the drawings is similar to Figure 1 and 2, and corresponding reference numerals have been applied to corresponding parts.

In the brake of Figures 3 and 4, however, the gap 60 in which the hydraulic actuator 40 is accommodated is constructed by removing the total thickness of the material of each plate 10, 11 for a circumferential distance necessary to define the gap 60. Each pressure plate 10, 11, is therefore provided with a circumferentially extending recess 63, 64 which extends radially inwards from the outer peripheral edge of the plates, from both sides of each respective plate. The inner ends 65, 66 of both recesses 63, 64 are of arcuate outline to conform to the outline of the cylinder 41 from which they are spaced.

In this construction a pair of inner and outer telescopic pistons 67, 68 are housed in the cylinder 41. The outer piston 68 works in the bore 42 in the cylinder 41, and the inner piston 67 works in a bore in the outer piston. A compression spring 69 acts between the two pistons 67 and 68 to hold them in engagement with the abutment faces 50, 51.

The brake is adapted to be actuated mechanically by means of a wedge 70 carried by a pull-rod 71 and by means of which the wedge can be withdrawn radially to effect relative angular movement between the pressure plates 10,11, by co-operation with respective abutments 72, 73 on the plates 10, 11.

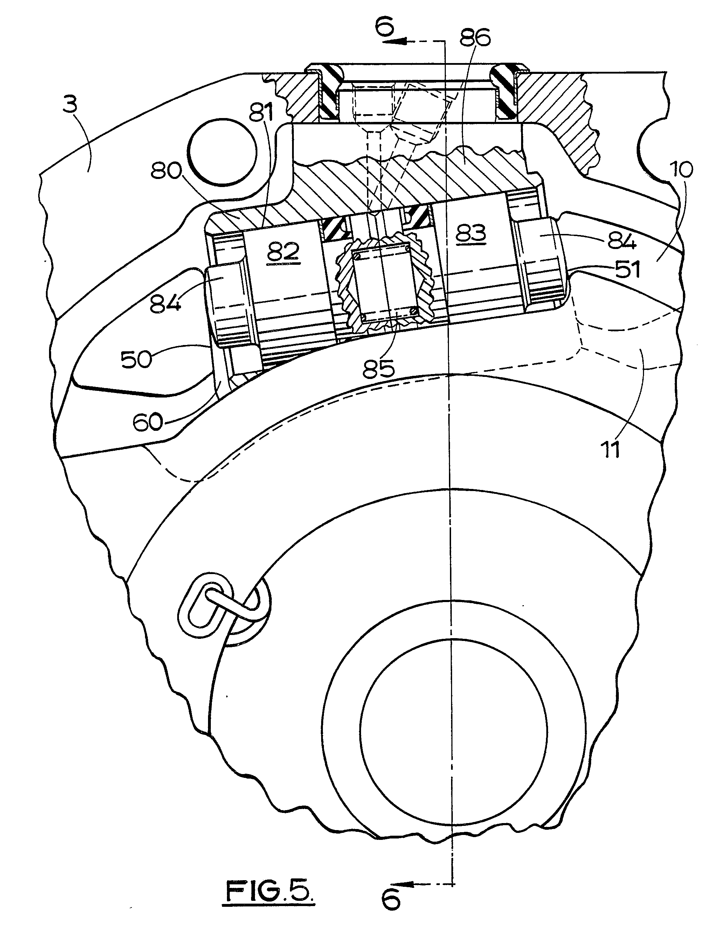

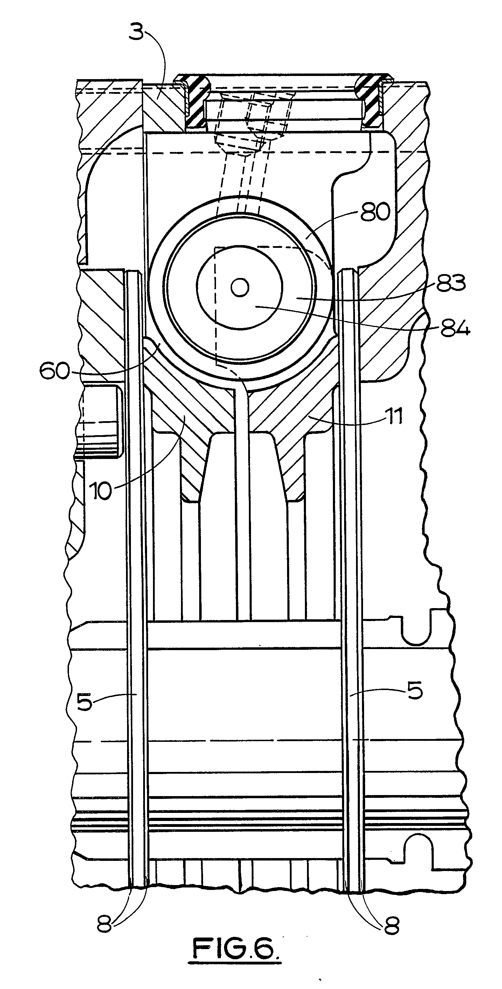

In the brake illustrated in Figures 5 and 6 of the accompanying drawings, the hydraulic actuator 40 comprises a cylinder body 80 having a longitudinal bore 81 in which work a pair of oppositely arranged pistons 82, 83. Each piston 82, 83 has an outwardly directed nose 84 of reduced diameter acting on the respective abutment face 50, 51. A compression spring 85 housed in complementary recesses in the inner ends of the pistons 82, 83 acts between the pistons 82, 83 to hold them in engagement with the abutment faces 50, 51.

The cylinder body 80 is carried from the housing 3 by means of a spigot 86, and the body 80 is displaced angularly and circumferentially with respect to the spigot 86. This facilitates installation within the particular configuration of the housing illustrated.

The construction and operation of the brake of Figures 5 and 6 is otherwise the same as that of Figures 3 and 4, and corresponding reference numerals have been applied to corresponding parts.

In the brakes described above with reference to Figures 3 and 4, and 5 and 6, the outer faces of the pressure plates 10, 11, which define braking faces with which adjacent friction linings 8 are engagable, are discontinuous or are interrupted by the presence of the gap 60.

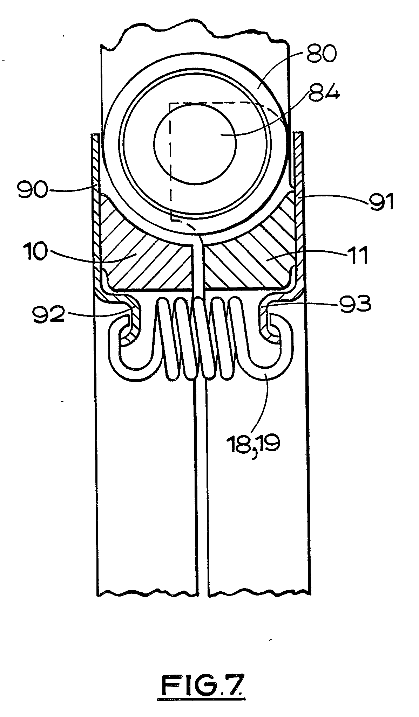

In the modified brake illustrated in Figure 7 of the accompanying drawings the two pressure plates 10 and 11 are sandwiched between a pair of relatively thin continuous annular metal discs 90, 91. The discs 90, 91 include inwardly directed, angularly spaced, lugs 92, 93 which form anchorages for the outer ends of the tension return springs 18, 19 which, in turn, act through the discs 90, 91 to urge the pressure plates axially towards each other into retracted positions. The disc 90, 91 are keyed against rotation with respect to the plates 10 and 11 by the provision of case recesses in the plates 10, 11 in which complementary portions of the discs 90, 91 are located.

The outer faces of the discs 90, 91 defined continuous annular braking faces with which the adjacent friction linings 8 on the discs 5 are engagable.

**Claims**

1. A self-energising disc brake in which rotatable friction discs provided with linings (8) of friction material are adapted to be brought into engagement with spaced opposed braking surfaces (9) in a housing (3) by pressure plates (10, 11) located between the friction discs and centred by stationary pilot lugs (12, 13, 14, 15) balls or rollers (16) are located in co-operating oppositely inclined angularly spaced recesses (17) in the adjacent faces of the pressure plates, and the application of the brake is initiated by moving the pressure plates angularly in opposite directions, the pressure plates then moving apart by a tendency for the balls or rollers to ride up ramps defined by the edges of the recesses so that the pressure plates move into engagement with the friction discs which are urged into engagement with the radial surfaces, the pressure plates being carried round with the friction discs until one is arrested by the engagement of a lug (22, 23) on the plate with a drag-taking stop abutment (20, 21) in the housing, and the continued angular movement of the other pressure plate providing a servo action, the brake being operated hydraulically for normal service operation by means of an hydraulic actuator (40) which is located within the housing, and the actuator comprises a cylinder body (41) having a longitudinal bore (42) of which the axis is chordal to the pressure plates and in which works at least one piston (46, 47) co-operating with one of the pressure plates, characterised in that the cylinder body (41) is so positioned between the pressures plates (10, 11) that the line of action of the force from the piston to the respective pressure plate acts at a position disposed within the radial thickness of the plate (10, 11) between its radially innermost and outermost peripheral edges.

2. A brake according to claim 1, characterised in that the line of action of the force is substantially coincident with the path of rolling contact between the balls or rollers (16) and the ramps when the pressure plates (10, 11) are moved angularly to initiate application of the brake.

3. A brake according to claim 1 or claim 2, characterised in that the cylinder body is disposed in a circumferentially extending gap (60) defined between complementary portions (61, 62) of the two pressure plates (10, 11).

4. A brake according to claim 3, characterised in that the gap (60) is formed in the inner adjacent faces of the pressure plates (10, 11) with the outer faces of the pressure plates being continuous.

5. A brake according to claim 3, characterised in that the gap (60) is formed by removing the total thickness of material of each plate for a required circumferential distance.

6. A brake according to claim 5, characterised in that a relatively thin annular disc (90, 91) is mounted on the outer face of each pressure plate (10, 11).

7. A brake according to claim 6, characterised in that each annular disc (90, 91) is keyed against rotation with respect to the pressure plate upon which it is mounted.

8. A brake according to claim 6 or claim 7, characterised in that each annular disc includes angularly spaced lugs (92, 93) which project inwardly with respect to the inner edges of the pressure plates, in which complementary pair of lugs form anchorages for opposite ends of return springs (18, 19) which act to urge the annular discs towards each other, in turn acting to urge the pressure plates towards each other into a retracted position.

9. A brake according to any of claims 3-8, characterised in that the gap (60) extends radially inwards for distance such that the cylinder (41) is disposed wholly within the radial thickness of the plates (10, 11).

10. A brake according to any of claim 3-9, characterised in that equivalent amounts of material are removed from the pressure plates (10, 11) at positions diametrically opposite the gap (60) substantially to balance the plates in operation.

11. A brake according to any preceding claim, characterised in that the cylinder body (41) is fixed to the housing (3) and incorporates a pair of opposed pistons (46, 47) which, at their outer ends, having direct engagements with complementary abutment surfaces (50, 51) on the pressure plates (10, 11).

12. A brake according to claim 11, characterised in that the pistons (46, 47) work in a common bore (42) in the body (41).

13. A brake according to claim 11, characterised in that the pistons comprise a telescopic assembly of inner and outer pistons (67, 68) of which the outer piston works in a bore (42) in the body (41), and the inner piston (67) works in a bore in the outer piston (68).

14. A brake according to any preceding claim, characterised in that the body (41) depends from a mounting plate (43) which is detachably mounted on the housing (3) and forms a closure for a radial opening (44) through which the cylinder body extends into the housing.

15. A brake according to claim 14, characterised in that the brake is also applied for parking or in an emergency by a mechanical mechanism which extends through a second radial opening in the housing (3) spaced angularly from the opening (44) through which the cylinder body extends.

16. A brake according to claim 15, characterised in that the mechanical mechanism comprises a pair of toggle links (27, 28) of which each link is pivotedly coupled at its outer end to a respective one of the pressure plates (10, 11) by means of a pivotal connection (29, 30), the inner ends of both links being pivotally connected to a pull-rod (25) which is radially displaceable to draw the pivotal connections relatively towards each other to initiate application of the brake.

17. A brake according to claim 16, characterised in that each pivotal connection also lies substantially on a pitch circle of the respective pressure plate coincident with the line of action of the force from the respective piston (10, 11).

18. A brake according to claim 15, characterised in that the mechanical mechanism comprises a wedge (70) which acts between abutments (72, 73) on the plates and is adapted to be withdrawn relatively from the housing (3) in a radial direction to effect relative angular movement between the plates.

**FIG.1.**

FIG. 2.

FIG.3.

FIG.4.

FIG.5.

**FIG.6.**

## FIG.7

| | **DOCUMENTS CONSIDERED TO BE RELEVANT** | | EP 88306670.6 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | US - A - 4 611 691 (LUCAS INDU-STRIES) <br> * Fig. 1 * | 11,12, 14-16 | F 16 D 55/14 |
| P,A | EP - A1 - 0 231 965 (SIRMAC OFFICINE MECCANICHE) <br> * Fig. 2,4 * | 11,13, 15,16 | |
| A | EP - A1 - 0 195 533 (LUCAS INDUSTRIES) <br> * Fig. 2 * | 11,14, 15,18 | |
| A | GB - A - 2 163 225 (LUCAS INDUSTRIES) <br> * Fig. 1,2 * | 11,12 | |
| A | US - A - 4 676 345 (LUCAS INDUSTRIES) <br> * Fig. 1 * | 11,12 | TECHNICAL FIELDS SEARCHED (Int. Cl.4) <br><br> F 16 D 55/00 |
| A | EP - A1 - 0 203 729 (LUCAS INDUSTRIES) <br> * Fig. 1-6 * | 11,12 | |
| A | DE - B2 - 1 965 170 (KLAUE) <br> * Fig. 2 * | 11,12 | |

The present search report has been drawn up for all claims

| Place of search <br> VIENNA | Date of completion of the search <br> 24-10-1988 | Examiner <br> KAMMERER |
|---|---|---|